# EUROPÄISCHE PATENTANMELDUNG

(11) **EP 3 072 654 A1**
(43) Veröffentlichungstag der Anmeldung: **28.09.2016**
(21) Anmeldenummer: 15160997.1
(22) Anmeldetag: 26.03.2015
(51) Int. Cl.: B27N 3/08, B27N 3/18, B27N 3/20, B27N 7/00, B32B 21/06, B32B 21/08, B29C 69/00, B27N 3/04

(54) **Verfahren zum Herstellen eines ebenen Formteils**

(71) Anmelder: Topalit GmbH, 4843 Ampflwang (AT)
(72) Erfinder: Schallenmüller, Karl-Heinz, 99820 Hörselberg-Hainich (DE); Lettner, Franz, 4843 Ampflwang (AT)
(74) Vertreter: Kohlmann, Kai

(57) **Zusammenfassung**

Die Erfindung betrifft ein Verfahren zum Herstellen eines ebenen Formteils mit einer Ober- und einer Unterseite sowie einem umlaufenden Rand aus einer Pressmasse enthaltend ein Gemisch aus organischen Faserstoffen und wärmehärtendem Bindemittel, wobei das Formteil eine Ober- und Unterseitenbeschichtung aufweist. Um die Herstellung von ebenen Formteilen, insbesondere Tischplatten mit geringerem bleibenden Verzug bei ungleichmäßiger Wärmeeinwirkung auf die Ober- und Unterseite zu ermöglichen, wird eine Verfahren vorgeschlagen, bei dem in einem ersten Heißpressgang aus dem Vorpressling ein heißgepresster Kern ohne Ober- oder Unterseitenbeschichtung hergestellt wird. Erst in einem zweiten Heißpressgang wird der Kern mit der Oberseitenbeschichtung versehen und zu dem halbfertigen Formteil verpresst. Schließlich wird in dem dritten Heißpressgang das halbfertige Formteil mit der Unterseitenbeschichtung versehen und zum Formteil fertiggepresst.

## Beschreibung

Die Erfindung betrifft ein Verfahren zum Herstellen eines ebenen Formteils mit einer Ober- und einer Unterseite sowie einem umlaufenden Rand aus einer Pressmasse enthaltend ein Gemisch aus organischen Faserstoffen und wärmehärtendem Bindemittel, wobei das Formteil eine Ober- und Unterseitenbeschichtung aufweist.

Formteile geringer Dicke und/oder mit flachen Außenkanten werden hergestellt, indem die Pressmasse oder ein kalt gepresster Vorpressling zusammen mit einer Ober- und Unterseitenbeschichtung in eine Heißpressform eingelegt und in einem einzigen Heißpressgang zum Fertigteil verpresst werden. Dieses Verfahren wird beispielsweise von der Firma WERZALIT GmbH + Co. KG, Oberstenfeld, Deutschland zur Herstellung von technischen Formteilen oder Fassadenelementen angewandt.

Bei einem sehr häufig angewandten, aus der EP 0156926 A1 bekannten Verfahren wird aus der Pressmasse zunächst durch Vorpressen in einer Kaltpressform ein Vorpressling hergestellt. Der Vorpressling wird zusammen mit der Unterseitenbeschichtung, insbesondere einem mit Harz imprägnierten Papier, in einem ersten Heißpressgang zu einem Kern verpresst. Der in der Heißpressform verbleibende Kern wird in einem zweiten Heißpressgang mit der Oberseitenbeschichtung versehen. Bei der Oberseitenbeschichtung handelt es sich insbesondere um ein oder mehrere harzimprägnierte Papiere wobei eines ein Dekor ist.

Zur Verbesserung der Planlage des Formteiles und zur beidseitigen dekorativen Beschichtung gibt es auch eine Modifizierung obigen Verfahrens, bei dem zunächst die Pressmasse in eine Kaltpressform eingebracht und zu einem Vorpressling vorgepresst wird. Der Vorpressling wird sodann in eine Heißpressform eingelegt und in einem ersten Heißpressgang zu einem Kern gepresst. Nach dem Aushärten wird der Kern aus der Heisspressform entnommen und entgratet. Dieser Kern wird sodann mit einer Ober- und Unterseitenbeschichtung in derselben Heißpressform in einem zweiten Heißpressgang beschichtet. Die Beschichtung wird insbesondere von einem mit Harz imprägnierten Papier gebildet. Das vorstehend beschriebene Verfahren wird von der Topalit GmbH, Bahnhofstraße 1, 4843 Ampflwang, Österreich zur Herstellung von Tischplatten eingesetzt.

Die beiden letztgenannten Verfahren mit zwei Heißpressgängen werden zur Herstellung von Tischplatten angewandt, die aufgrund ihrer Beschichtung im Freien einsetzbar sind. Bei starker Sonneneinstrahlung auf die Oberfläche der Tischplatte wird diese einseitig erwärmt, was letztlich zum Verzug, das heißt zum Durchbiegen der Platte nach unten führt. Der Verzug resultiert aus der Isolationswirkung der Holzfasern im Kern wodurch Schrumpf- und Quellvorgänge über den Querschnitt der Tischplatte zur Asymmetrie der Zugspannungen von Ober- und Unterseite führen. Die Asymmetrie der Zugspannungen verursacht letztlich den Verzug. Der Verzug bildet sich weitgehend zurück, wenn die Temperaturbelastung der Oberfläche nicht mehr vorliegt. Besonders störend erweist sich jedoch der bleibende Anteil der Verformung der Tischplatte im Gebrauch.

In der Praxis hat sich herausgestellt, dass das aus der EP 0156926 A bekannte Verfahren die größte bleibende Verformung zur Folge hat.

Ausgehend von diesem Stand der Technik liegt der Erfindung die Aufgabe zugrunde, ein Verfahren der eingangs erwähnten Art bereitzustellen, das die Herstellung von ebenen Formteilen, insbesondere Tischplatten mit geringerem bleibenden Verzug bei ungleichmäßiger Wärmeeinwirkung auf die Ober- und Unterseite ermöglicht.

Diese Aufgabe wird durch ein Verfahren der eingangs erwähnten Art gelöst, das folgende Schritte aufweist:
1.1 Einbringen der Pressmasse in eine Kaltpressform, Vorpressen der Pressmasse zu einem Vorpressling und Entnehmen des Vorpresslings aus der Kaltpressform,
1.2 Einlegen des Vorpresslings in eine Heißpressform und Pressen des Vorpresslings zu einem Kern in einem ersten Heisspressgang,
1.3 Aufbringen einer Oberseitenbeschichtung auf die Oberseite des in der Heißpressform verbleibenden Kerns und Pressen des mit der Oberseitenbeschichtung versehenen Kerns in einem zweiten Heisspressgang zu einem halbfertigen Formteil,
1.4 Anheben des halbfertigen Formteils, Einlegen einer Unterseitenbeschichtung in die Heißpressform und Pressen des mit der Unterseitenbeschichtung an seiner Unterseite versehenen halbfertigen Formteils in einem dritten Heißpressgang zu dem fertigen Formteil.

Der Kerngedanke der Erfindung besteht darin, die Asymmetrie der Herstellung des aus der EP 0177628 A bekannten Verfahrens umzukehren, wobei zudem in einem ersten Heißpressgang aus dem Vorpressling ein heißgepresster Kern ohne Ober- oder Unterseitenbeschichtung hergestellt wird. Erst in dem zweiten Heißpressgang wird der Kern mit der Oberseitenbeschichtung versehen und zu dem halbfertigen Formteil verpresst.

Schließlich wird in dem dritten Heißpressgang das halbfertige Formteil mit der Unterseitenbeschichtung versehen und zum Formteil fertiggepresst.

Die nach dem erfindungsgemäßen Verfahren hergestellte Tischplatte zeigt auch bei stark unterschiedlicher Wärmebelastung von Ober- und Unterseite kaum bleibenden Verzug. Die Rückstellkräfte bringen die Tischplatte nach Wegfall der einseitigen Wärmebelastung innerhalb kurzer Zeit wieder in die ebene Ausgangsform zurück. Die Rückstellkräfte beruhen auf der zuletzt auf der Unterseite aufgebrachten Beschichtung, die ihre gesamte Schrumpfspannung aufbaut, wogegen die vorher aufgebrachten Beschichtungen diese schon wieder teilweise abgebaut haben.

Die verwendete Pressmasse besteht insbesondere aus lignozellulose-haltigen Faserstoffen, wie zerkleinerten und getrockneten Holzspänen sowie einem wärmehärtendem Bindemittel, beispielsweise einem Kunstharz. Als Kunstharze kommen Melamin-, Harnstoffformaldehyd- oder Phenolformaldehydharze in Betracht. Beim Vorpressen der Pressmasse in der Kaltpressform entsteht aus der Pressmasse der dem fertigen Formteil bereits sehr ähnliche Vorpressling, der bereits ein fester, handhabbarer Körper ist, obwohl die zum Aushärtern des wärmehärtenden Bindemittels erforderliche Wärmeenergie noch nicht zugeführt wurde. Die erforderliche Wärmemenge zum Aushärten des wärmehärtenden Bindemittels wird dem Vorpressling in der Heißpressform in dem ersten Heißpressgang zugeführt.

Die auf die Oberseite aufgebrachte Oberseitenbeschichtung ist zumeist mehrlagig und umfasst ein mit Harz imprägniertes Papier oder ein Gewebe oder ein Furnier. Das mit Harz imprägnierte Papier, da Gewebe oder Furnier kann bedruckt oder mit einem Dekor versehen sein. Über dem imprägnierten Papier, dem Gewebe oder dem Furnier ist üblicherweise eine transparente Schutzschicht angeordnet. Als Schutzschicht kommt meist ein sogenanntes klares Overlay-Papier aus nicht gefülltem Alpha-Zellulose-Papier oder ein mit einem Duroplast getränktes Glasfaserfleece zum Einsatz. Die transparente Schutzschicht kann jedoch auch eine dickere Kunstharzschicht sein.

Die Unterseitenbeschichtung umfasst üblicherweise zumindest ein mit Harz imprägniertes Papier. Das mit Harz imprägnierte Papier deckt die Rückseite der Tischplatte ganz oder teilweise ab.

Bei den für die Beschichtung verwendeten Harzen handelt es sich um Harnstoff-, Melamin- und Phenolharze, also Harze gleicher Reaktionsweise wie die zur Kernverleimung verwendeten.

Die Faserstoffe (Holzspäne) der Pressmasse, weisen einen mehr oder minder großen Anteil an natürlichen Harzen auf. Beim ersten Heißpressgang können diese natürlichen Harze unter dem wirkendem Pressdruck und der Wärmeeinwirkung fließen und sich auf den Oberflächen der Heißpressform ablagern. Um den damit verbundenen Reinigungsaufwand des Heißpresswerkzeugs zu reduzieren und eine Verschlechterung der Oberfläche der nachfolgend in der Heißpressform hergestellten Formteile durch Ablagerungen zu vermeiden, wird in einer Ausgestaltung der Erfindung vorgeschlagen, dass der Vorpressling vor dem ersten Heißpressgang zumindest teilweise mit einer für natürliche Harze undurchlässigen Abdeckschicht versehen wird. Bei der Abdeckschicht handelt es sich insbesondere um ein ein- oder beidseitig mit Kunstharz imprägniertes Abdeckpapier. Das Abdeckpapier verbleibt am Kern und verhindert, dass sich beim Pressvorgang von der Oberfläche lösende Schmutzpartikel und/oder aus dem Vorpressling beim ersten Heißpressgang austretendes natürliches Harz auf der Oberfläche der Form anlagern und die Oberfläche des Presslings in darauffolgenden Pressvorgängen beeinträchtigen.

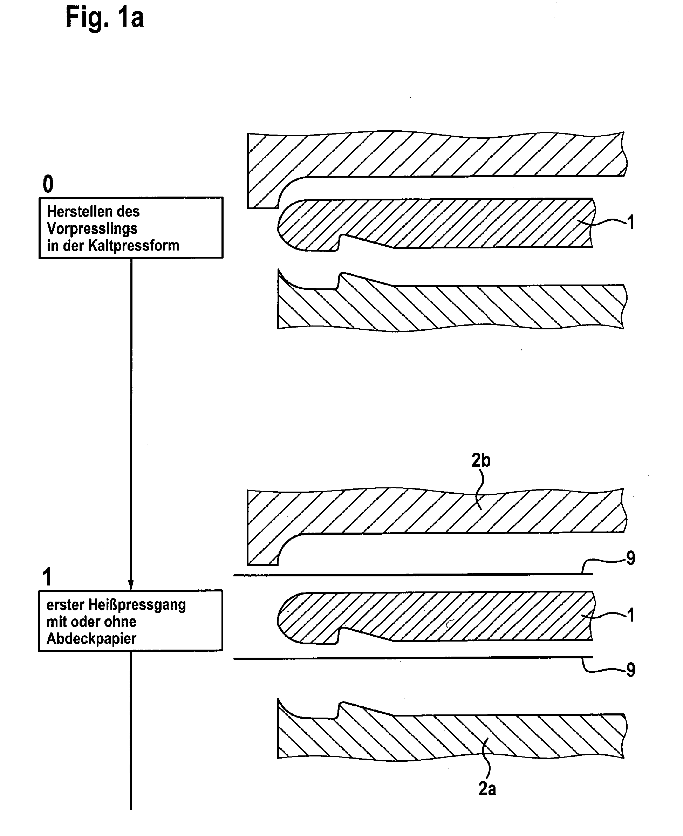

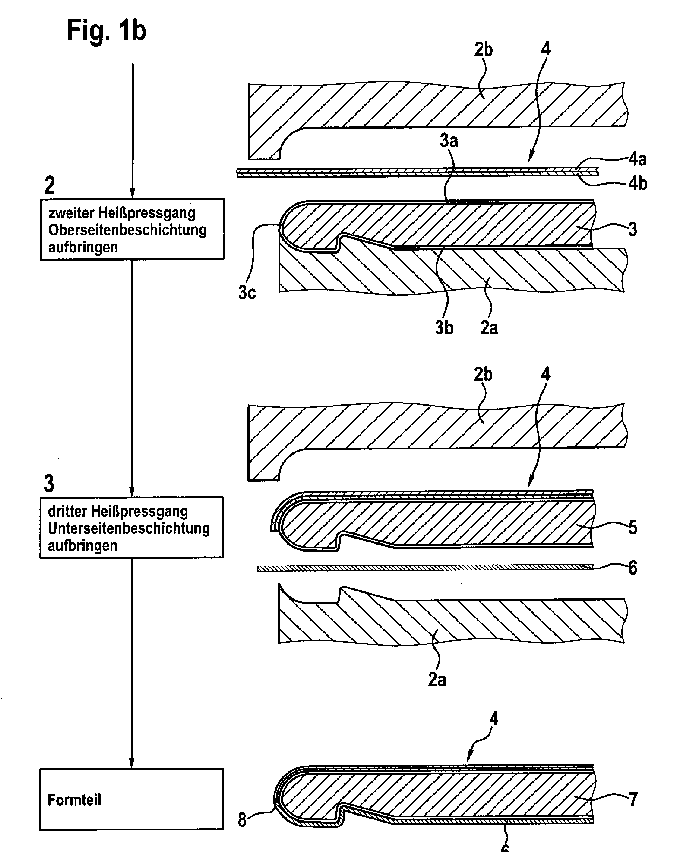

Nachfolgend wird das erfindungsgemäße Verfahren anhand eines in den Figuren 1a, 1b dargestellten Schaubildes näher erläutert:
Zunächst wird die Pressmasse in eine Kaltpressform eingebracht und dort zu einem bereits weitgehend dem fertigen Formteil (7) entsprechenden Vorpressling (1) gepresst. Das Verdichtungsverhältnis der in die Kaltpressform eingestreuten Pressmasse zu dem Vorpressling beträgt 2:1 bis 5:1 bei einem spezifischen Pressdruck im Bereich von 1 - 4 N/mm². Mit dem Verdichtungsverhältnis der eingestreuten Pressmasse zu dem Vorpressling ist das Verhältnis der Dicke der eingestreuten Pressmassenschicht und der Dicke des verdichteten Vorpresslings gemeint. Das Vorpressen erfolgt bei Raumtemperatur.

Der handhabbare Vorpressling (1) wird sodann in eine Heißpressform (2) mit einem in der Figur nur schematisch dargestellten Unter- und Oberwerkzeug (2a, 2b) eingelegt. In der Heißpressform (2) wird der Vorpressling (1) in einem ersten Heißpressgang zu einem Kern (3) gepresst. Dabei kann fallweise auch Abdeckpapier (9) auf der Ober- und oder Unterseite beigelegt werden, das anschließend am Kern (3) anhaftet. Abhängig von der Dicke des Vorpresslings beträgt die Presszeit in dem ersten Heißpressgang 150 - 500 Sekunden. Das Heißpressen des Vorpresslings erfolgt mit einer Temperatur von 150-170° Celsius, vorzugsweise 160° Celsius in dem Oberwerkzeug (2b) und einer Temperatur von 120-140° Celsius in dem Unterwerkzeug (2a). Die geringere Temperatur des Unterwerkzeugs (2a) erlaubt eine längere Liegezeit des in die Heißpressform (2) eingelegten Vorpresslings, ohne dass es vor dem Schließen der Heißpressform (2) bereits zu Verformungen kommt. Der spezifische Pressdruck in dem ersten Heißpressgang liegt im Bereich von 1 - 5 N/mm².

Vor dem zweiten Heißpressgang wird eine zweilagige Oberseitenbeschichtung (4) umfassend ein mit Harz imprägniertes Papier (4b) und eine transparente Schutzschicht (4a) auf die Oberseite (3a) des in dem Unterwerkzeug (2a) der Heißpressform (2) verbleibenden Kerns (3) aufgebracht.

Anschließend wird der Kern (3) mit der aufgebrachten Oberseitenbeschichtung (4) in einem zweiten Heißpressgang zu einem halbfertigen Formteil (5) gepresst. Nach dem zweiten Heisspressgang ist die Oberseitenbeschichtung (4) fest mit dem Kern (3) verbunden. Die Oberseitenbeschichtung (4) umschließt nach dem Pressvorgang auch einen oberen Teil des umlaufenden Randes(3c). Die Presszeit des zweiten Heißpressgangs beträgt zwischen 100 - 180 Sekunden und erfolgt mit einer Temperatur von 150-170° Celsius, vorzugsweise 160° Celsius in dem Oberwerkzeug (2b) und einer Temperatur von 120-140° Celsius in dem Unterwerkzeug (2a). Die geringere Temperatur des Unterwerkzeugs (2a) erlaubt eine längere Liegezeit des in die Heißpressform (2) eingelegten Kerns (3) mit der aufgebrachten Oberseitenbeschichtung (4), ohne dass es vor dem Schließen der Heißpressform (2) bereits zu Verformungen kommt. Der spezifische Pressdruck in dem zweiten Heißpressgang liegt im Bereich von 1 - 5 N/mm².

Vor dem dritten Heißpressgang wird das halbfertige Formteil aus der Heißpressform (2) beispielsweise mit einem Sauggreifer angehoben. In das Unterwerkzeug (2a) der Heißpressform wird eine Unterseitenbeschichtung (6) in Form eines mit Harz imprägnierten Papiers eingelegt. Sodann wird das an seiner Unterseite (3b) mit der Unterseitenbeschichtung (6) versehene halbfertige Formteil (5) in einem dritten Heißpressgang zu dem fertigen Formteil (7) gepresst. Nach dem dritten Heisspressgang ist die Unterseitenbeschichtung fest mit dem Kern (3) verbunden.
Diese Unterseitenbeschichtung (6) kann die Unterseite (3b) ganz oder teilweise bedecken, sofern der nicht bedeckte Teil der Unterseite zuvor mit einem Abdeckpapier (9) versehen wurde.

Die Presszeit des dritten Heißpressgangs beträgt zwischen 90 - 120 Sekunden und erfolgt mit einer Temperatur von 150-170° Celsius, vorzugsweise 160° Celsius in dem Oberwerkzeug (2b) und einer Temperatur von 120-140° Celsius in dem Unterwerkzeug (2a). Die geringere Temperatur des Unterwerkzeugs (2a) erlaubt eine längere Liegezeit des in die Heißpressform (2) eingelegten, mit der Unterseitenbeschichtung (6) versehenen halbfertigen Formteils, ohne dass es vor dem Schließen der Heißpressform (2) bereits zu Verformungen kommt. Der spezifische Pressdruck in dem zweiten Heißpressgang liegt im Bereich von 1 - 5 N/mm².

Aus der Darstellung des fertigen Formteils (7) ist erkennbar, dass die Unterseitenbeschichtung sich ebenfalls in einen unteren Teil des gewölbten Randes (3c) erstreckt. Der obere und der untere Teil des Randes (3c) ist durch eine um das Formteil (7) umlaufende Stoßkante (8) getrennt, an der die Ober- und Unterseitenbeschichtung (4,6) auf Stoß aneinander anliegen.

**Bezugszeichenliste**

| Nr. | Bezeichnung |
|---|---|
| 1. | Vorpressling |
| 2. | Heißpressform |
| 2a. | Unterwerkzeug |
| 2b. | Oberwerkzeug |
| 3. | Kern |
| 3a. | Oberseite |
| 3b. | Unterseite |
| 3c. | Rand |
| 4. | Oberseitenbeschichtung |
| 4a. | Imprägniertes Papier |
| 4b. | Schutzschicht |
| 5. | Halbfertiges Formteil |
| 6. | Unterseitenbeschichtung |
| 7. | Formteil |
| 8. | Stoßkante |
| 9. | Abdeckpapier |

## Patentansprüche

1. Verfahren zum Herstellen eines ebenen Formteils (7) mit einer Ober- und einer Unterseite (3a, 3b) sowie einem umlaufenden Rand (3c) aus einer Pressmasse enthaltend ein Gemisch aus organischen Faserstoffen und wärmehärtendem Bindemittel, wobei das Formteil (7) eine Ober- und Unterseitenbeschichtung (4,6) aufweist, mit den Schritten:
1.1 Einbringen der Pressmasse in eine Kaltpressform, Vorpressen der Pressmasse zu einem Vorpressling (1) und Entnehmen des Vorpresslings (1) aus der Kaltpressform,
1.2 Einlegen des Vorpresslings (1) in eine Heißpressform (2) und Pressen des Vorpresslings (1) zu einem Kern (3) in einem ersten Heisspressgang,
1.3 Aufbringen einer Oberseitenbeschichtung (4) auf die Oberseite (3a) des in der Heißpressform verbleibenden Kerns (3) und Pressen des mit der Oberseitenbeschichtung (4) versehenen Kerns (3) in einem zweiten Heisspressgang zu einem halbfertigen Formteil (5),
1.4 Anheben des halbfertigen Formteils (5), Einlegen einer Unterseitenbeschichtung (6) in die Heißpressform (2) und Pressen des mit der Unterseitenbeschichtung (6) an seiner Unterseite (3b) versehenen halbfertigen Formteils (5) in einem dritten Heißpressgang zu dem fertigen Formteil (7).

2. Verfahren nach Anspruch 1, **dadurch gekennzeichnet, dass** der Vorpressling (1) vor dem ersten Heisspressgang zumindest teilweise mit einer für natürliche Harze undurchlässigen Abdeckschicht versehen wird.

3. Verfahren nach Anspruch 2, **dadurch gekennzeichnet, dass** die für natürliche Harze undurchlässige Abdeckschicht ein ein- oder beidseitig mit Kunstharz imprägniertes Abdeckpapier umfasst.

4. Verfahren nach einem der Ansprüche 1 bis 3, **dadurch gekennzeichnet, dass** die auf die Oberseite (3a) aufgebrachte Oberseitenbeschichtung (4) ein mit Harz imprägniertes Papier oder ein Gewebe oder ein Furnier mit oder ohne Dekor umfasst.

5. Verfahren nach Anspruch 4, **dadurch gekennzeichnet, dass** die auf die Oberseite (3a) des Kerns (3) aufgebrachte Oberseitenbeschichtung (4) zusätzlich eine über dem imprägnierten Papier oder dem Gewebe oder dem Furnier angeordnete transparente Schutzschicht (4b) aufweist.

6. Verfahren nach Anspruch 5, **dadurch gekennzeichnet, dass** die Schutzschicht (4b) aus einem transparenten Overlay-Papier aus nicht gefülltem Aplpha-Zellulose-Papier oder aus einen mit einem Duroplast getränkten Glasfaservlies oder einer Harzschicht besteht.

7. Verfahren nach einem der Ansprüche 1 bis 6, **dadurch gekennzeichnet, dass** die mit der Unterseite (3b) verpresste Unterseitenbeschichtung (6) mindestens ein mit Harz imprägniertes Papier umfasst.

8. Ebenes Formteil (7) mit einer Ober- und einer Unterseite sowie einer umlaufenden Kante aus einer Pressmasse enthaltend ein Gemisch aus organischen Faserstoffen und wärmehärtendem Bindemittel, wobei das Formteil (7) eine Ober- und Unterseitenbeschichtung (4, 6) aufweist, herstellbar mit einem Verfahren nach einem oder mehreren der Ansprüche 1 bis 7.
